# EUROPEAN PATENT SPECIFICATION

(11) **EP 4 194 569 B1**
(45) Date of publication and mention of the grant of the patent: **31.07.2024**
(21) Application number: 21213185.8
(22) Date of filing: 08.12.2021
(51) Int. Cl.: C21B 13/00, C21B 13/14, C22B 19/02, C22B 15/00, C22B 26/20, C21B 5/00

(54) **METHOD FOR HANDLING PARTICULATE METAL**
VERFAHREN ZUR HANDHABUNG VON TEILCHENFÖRMIGEM METALL
PROCÉDÉ DE MANIPULATION DE PARTICULES MÉTALLIQUES

(43) Date of publication of application: 14.06.2023
(73) Proprietor: Doosan Lentjes GmbH, 40880 Ratingen (DE)
(72) Inventor: KRUSCH, Sebastian, 44892 Bochum (DE); NARIN, Oguzhan, 45549 Sprockhövel (DE)
(74) Representative: Feucker, Max Martin

(56) References cited:
- EP-A2- 3 045 549
- US-A- 4 236 699
- US-A1- 2015 329 931

## Description

The present invention relates to a method for handling particulate metal and in particular for transporting energy over grate distances.

It is known to store energy in form of particulate matter comprising mainly particulate metal, when there is a surplus of electrical energy from renewable energy sources. If there is a surplus, an electrolysis unit is run with the electrical energy to produce hydrogen and oxygen. The hydrogen is used for a reduction reaction with solid particulate metal, which is for example embodied by granulate or pellets comprising metal (oxide), for example by iron ore or iron ore pellets. The thus treated (reduced) particulate metal can be stored as bulk material in a bunker, stock pile or the like. When energy is needed, the reduced particulate meal can be oxidized, wherein the thermal energy derived from this exothermal oxidation reaction can be further used for heating or producing electrical energy. Accordingly, systems are known, in which the particulate metal is run in a closed loop with a reduction reaction and an oxidation reaction. For example, EP 3 617 591 B1 suggests to arrange a reaction chamber and a combustion chamber close to an electrolysis unit for storing electrical energy, when there is a surplus of electrical energy. WO 2021/165441 A1 even suggests using the same fluidized bed apparatus for the reduction reaction and for the oxidation reaction.

JP 2011179773 A suggests transporting the oxidized particulate metal produced in an oxidization reactor to a reduction reactor by a vessel and to transport the reduced particulate metal with the vessel to the oxidation reactor.

Accordingly, the prior art suggests a closed loop system, in which the particulate metal is oxidized and reduced repeatedly.

Iron ore is often mined in locations far off the sites, in which the iron ore is processed. Nevertheless, at the mining location the environmental conditions are often optimal to provide electrical energy from renewable energy sources. For example, in Australia, in which iron ore mines are located, photovoltaic plants can be run very efficiently. Nevertheless, transporting electrical energy from these locations to far off industry sites (for example in Europe) is not possible in an efficient way. US 4,236,699, US 2015/329931 A1 and EP 3 045 549 A2 disclose a method with the features of the preamble of claim 1.

Therefore, it is an object of the present invention to provide a method for transporting energy over great distances.

The object is achieved with a method comprising the steps of the independent claim. Preferred embodiments of the invention are described in the subclaims and in the description, wherein single features of the preferred embodiments can be combined with each other in a technically meaningful manner.

The object is in particular achieved by a method for handling particulate metal, comprising the following steps:
1a) Providing particulate metal to a pretreatment unit at a first location,
1b) Pretreating the particulate metal in the pretreatment unit with a pretreatment agent to produce pretreated particulate metal,
2a) Transferring the pretreated particulate metal from the pretreatment unit to at least one transportation vessel,
2b) Transporting the pretreated particulate metal with the at least one transportation vessel to a second location,
3a) Transferring the pretreated particulate metal at the second location to a treatment system, and
3b) Processing the pretreated particulate metal in the treatment system.

The particulate metal may be embodied by particles (such as granulate, pellets and the like) comprising or consisting of a metal (such as iron, zinc, copper or alkali metal, for example magnesium) or of metal oxides. For example, the particulate metal may be iron ore or iron ore pellets.

The particulate metal is provided to a pretreatment unit at a first location, which for example is located close to the mining location of the particulate metal (i.e. iron ore). The pretreatment unit may be embodied as reactor for treating the solid particulate metal and may be embodied as any type of reactor known for treating solid particulate matter with a gas. For example, the pretreatment unit may be embodied as fixed bed reactor, as fluidized bed reactor or a circulating fluidized bed reactor, in which the particulate metal is provided as particulate matter and to which the pretreatment agent in gaseous form is supplied as process gas. Preferably, the pretreatment unit comprises a reaction chamber of a fluidized bed reactor.

The pretreatment agent is preferably embodied as reducing agent for the reduction of the solid particulate metal within the pretreatment unit. Accordingly, the pretreatment agent is of such a composition, that the solid particulate metal performs a (endothermic or eventually even an exothermic) reduction reaction with the solid particulate metal. The pretreatment agent is preferably a gas, which is supplied to the particulate metal in the pretreatment unit. If the pretreatment unit is embodied as fluidized bed reactor, the gas is preferably provided to a fluidizing bottom of the fluidized bed reactor, such that the particulate metal (and the eventually further particulate matter present in the fluidized bed reactor) is fluidized by the gas.

The pretreatment gas is preferably gaseous hydrogen, which is in particular produced with renewable energies, wherein in a preferred embodiment an electrolysis unit is run by electricity derived from renewable energy sources. Accordingly, in a preferred embodiment an electrolysis unit is arranged close to and is preferably connected to the pretreatment unit, so that the gaseous hydrogen produced by the electrolysis unit can be directly provided to the pretreatment unit and preferably to a fluidizing bottom of the fluidized bed reactor embodying the pretreatment unit.

As already indicated above, the pretreating step 1b) comprises preferably a reduction reaction of the initially provided particulate metal with the pretreatment agent embodied as reducing agent. This way the solid state of the initially provided particulate metal is kept, while the metal (oxide) of the solid particulate metal has reacted with the pretreatment agent. Accordingly, the pretreated (reduced) particulate metal is also present in the form of particles (granulate, pellets).

The pretreated particulate metal is transferred in method step 2a) to a transportation vessel, wherein the transportation vessel may be embodied as a wagon for railway transportation and/or as ship. The pretreated particulate metal may be transported first by train to a harbor and from there by a ship, wherein further transportation with further transportation vessels to the second location may also be possible.

In a preferred embodiment the pretreated particulate metal is transported in an inert atmosphere. Accordingly, an inert gas (such as N₂) may be supplied to the transportation vessel, so that an undesired reaction of the pretreated particulate metal with the natural atmosphere is avoided.

When the pretreated particulate metal has arrived at the second location, which is far off (for example more than 1.000 km, preferable more than 5.000km, or even more than 10.000 km) from the first location, the pretreated (in particular reduced) particulate metal is transferred to a treatment system. It is possible, that the treatment system is embodied as one single unit, in which the pretreated particulate metal is processed. For example, in this case the treatment system may be embodied as a blast furnace or the like, in which the pretreated particulate metal is smelted. As the particulate metal has been pretreated (reduced) previously, the smelting process is much more efficient, as less reducing agent needs to be supplied to the smelting process.

The treatment system comprises an intermediate treatment unit and a final treatment unit, in which case, the pretreated particulate metal is treated in the intermediate treatment unit with an intermediate treatment agent to produce intermediately treated particulate metal, wherein thermal energy or a gas is withdrawn from this intermediate treatment reaction.

According to the invention water steam is provided as intermediate treatment agent to the pretreated particulate metal, so that oxidized particulate metal and hydrogen is produced, wherein the hydrogen is withdrawn for a further process.

In each case, it is preferred that the intermediate treatment agent is supplied to a reactor, in which the intermediate (oxidation) reaction can occur. Such a reactor can be embodied as fixed bed reactor, as fluidized bed reactor or circulating fluidized bed reactor, in which the particulate matter (comprising the pretreated particulate metal) is fluidized by the intermediate treatment agent provided as gas to the fluidizing bottom. For example, oxygen comprising gas or water steam may be supplied to the fluidizing bottom of the fluidized bed reactor. By using fluidized bed reactors for the pretreating and intermediate treating the efficiency of the pretreating (reduction) reaction and of the intermediate (oxidization) reaction can be greatly enhanced.

The intermediately treated particulate metal is oxidized particulate metal, which is then provided to a final treatment unit in which the intermediately treated particulate metal is processed. In particular, the final treatment unit is a blast furnace or the like, in which the intermediately treated particulate metal is processed (i.e. smelted) in a known matter.

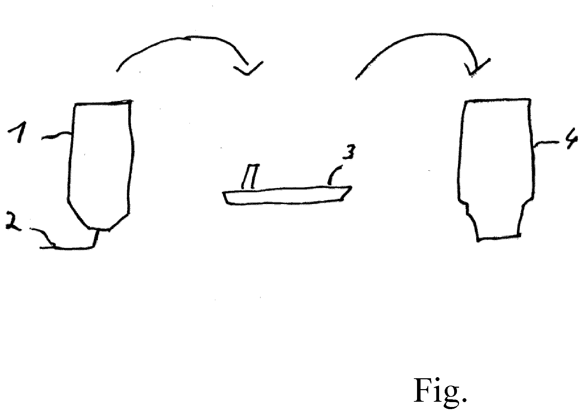

Accordingly, the present invention makes use of the fact that mined bulk material (such as iron ore) is transported over great distances, wherein the transportation logistic is additionally used to transport energy, which is produced at or near the mining location. The treated particulate metal can either be processed to produce energy at a far off second location or to enhance the efficiency of an already known process at the second location. The present invention and the technical background will now be described with regard to the figure in an exemplary way.

According to the invention particulate metal, such as iron ore pellets, is provided to a pretreatment unit 1. The pretreatment unit 1 is embodied as fluidized bed reactor, to which bottom a pretreatment agent 2 is provided. The pretreatment agent 2 is in particular gaseous hydrogen, which is produced by a (not shown) electrolysis unit run by renewable energies. The gaseous hydrogen fluidizes the particulate metal within the pretreatment unit 1, whereby an efficient reduction reaction of the particulate metal with the hydrogen occurs.

The pretreated (reduced) particulate metal is transferred to a transportation vessel 3, such as a ship or train wagon. The pretreated particulate metal, which is still in a solid form such as particles (granulates or pellets), is transported with the transportation vessel 3 to a second location, which is far off the first location.

At the second location the pretreated (reduced) particulate metal is supplied to a final treatment system 4 such as a blast furnace. As the particulate metal has been pretreated, it is of higher quality, so that the smelting process in the blast furnace is more efficient. In particular, less reducing agent needs to be supplied to the blast furnace compared to a process, when the particulate metal is not pretreated.

In a (not shown) alternative method the pretreated particulate metal may be transferred from the transportation vessel 3 to an intermediate treatment unit (for example embodied as fluidized bed reactor), in which oxygen or water vapor is supplied as an intermediate treatment agent to the pretreated particulate metal. Thermal energy and/or hydrogen can be withdrawn from this intermediate treatment step. The intermediately treated (oxidized) particulate metal, which is still in solid granular form, can than be supplied to a final treatment unit, such as a blast furnace.

### Reference signs

- 1: pretreatment unit
- 2: pretreatment agent
- 3: transportation vessel
- 4: final treatment system

## Claims

1. Method for handling particulate metal and in particular for transporting energy over great distances, comprising the following steps:
1a) Providing particulate metal to a pretreatment unit (1) at a first location,
1b) Pretreating the particulate metal in the pretreatment unit (1) with a pretreatment agent (2) to produce pretreated particulate metal,
2a) Transferring the pretreated particulate metal from the pretreatment unit to at least one transportation vessel (3),
2b) Transporting the pretreated particulate metal with the at least one transportation vessel (3) to a second location,
3a) Transferring the pretreated particulate metal at the second location to a treatment system (4),
3b) Processing the pretreated particulate metal in the treatment system (4), wherein step 3b) comprises the steps of:
3b. 1) Treating the pretreated particulate metal in an intermediate treatment unit with an intermediate treatment agent to produce intermediately treated particulate metal and to withdraw thermal energy and/or a gas, wherein the intermediately treated particulate metal is oxidized particulate metal
3b.2) Transferring the intermediately treated particulate metal to a final treatment unit (4), in which the intermediately treated particulate metal is processed,
**characterized in that**
water steam is provided as intermediate treatment agent to the pretreated particulate metal, so that oxidized particulate metal and hydrogen is produced, wherein the hydrogen is withdrawn for a further process.

2. Method according to one claim 1, wherein the intermediate treatment agent is supplied to the pretreated particulate metal in the intermediate treatment unit, preferably to a fluidizing bottom of the fluidized bed reactor such that the pretreated particulate metal is fluidized.

3. Method according to one of the preceding claims, wherein the treatment system comprises a blast furnace for processing the treated particulate metal.

4. Method according to one of the preceding claims, wherein the pretreatment unit (1) comprises a reaction chamber of a fluidized bed reactor.

5. Method according to one of the preceding claims, wherein the pretreatment agent (2) is a gas and is supplied to the particulate metal in the pretreatment unit (1), preferably to a fluidizing bottom of the fluidized bed reactor such that the particulate metal is fluidized.

6. Method according to one of the preceding claims, wherein the particulate metal is iron ore or preferably iron ore pellets.

7. Method according to one of the preceding claims, wherein the pretreatment agent (2) is a reducing agent and in particular gaseous hydrogen.

8. Method according to one of the preceding claims, wherein the gaseous hydrogen is produced with renewable energy, in particular in an electrolysis unit run by electricity derived from renewable energy sources.

9. Method according to one of the preceding claims, wherein the pretreated particulate metal is reduced particulate metal.

10. Method according to one of the preceding claims, wherein the at least one transportation vessel (3) comprises a wagon and/or a ship.

11. Method according to one of the preceding claims, wherein the pretreated particulate metal is transported in an inert atmosphere.

12. Method according to one of the preceding claims, wherein the particulate metal comprises a metal of the following group:
- Iron (Fe),
- Zinc (Zn),
- Copper (Cu),
- Alkali metal, in particular Magnesium (Mg).

## Patentansprüche

1. Verfahren zum Handhaben von teilchenförmigem Metall und insbesondere zum Transportieren von Energie über große Entfernungen, umfassend die folgenden Schritte:
1a) Bereitstellen von teilchenförmigem Metall an eine Vorbehandlungseinheit (1) an einem ersten Ort,
1b) Vorbehandeln des teilchenförmigen Metalls in der Vorbehandlungseinheit (1) mit einem Vorbehandlungsmittel (2), um vorbehandeltes teilchenförmiges Metall zu erzeugen,
2a) Überführen des vorbehandelten teilchenförmigen Metalls aus der Vorbehandlungseinheit in mindestens ein Transportfahrzeug (3),
2b) Transportieren des vorbehandelten teilchenförmigen Metalls mit dem mindestens einen Transportfahrzeug (3) zu einem zweiten Ort,
3a) Überführen des vorbehandelten teilchenförmigen Metalls am zweiten Ort an ein Behandlungssystem (4),
3b) Verarbeiten des vorbehandelten teilchenförmigen Metalls in dem Behandlungssystem (4), wobei Schritt 3b) die folgenden Schritte umfasst:
3b.1) Behandeln des vorbehandelten teilchenförmigen Metalls in einer Zwischenbehandlungseinheit mit einem Zwischenbehandlungsmittel, um zwischenbehandeltes teilchenförmiges Metall zu erzeugen und thermische Energie und/oder ein Gas abzuziehen, wobei das zwischenbehandelte teilchenförmige Metall oxidiertes teilchenförmiges Metall ist,
3b.2) Überführen des zwischenbehandelten teilchenförmigen Metalls an eine Endbehandlungseinheit (4), in der das zwischenbehandelte teilchenförmige Metall verarbeitet wird,
**dadurch gekennzeichnet, dass**
Wasserdampf als Zwischenbehandlungsmittel dem vorbehandelten teilchenförmigen Metall bereitgestellt wird, so dass oxidiertes teilchenförmiges Metall und Wasserstoff erzeugt wird, wobei der Wasserstoff für einen weiteren Prozess abgezogen wird.

2. Verfahren nach Anspruch 1, wobei das Zwischenbehandlungsmittel dem vorbehandelten teilchenförmigen Metall in der Zwischenbehandlungseinheit, vorzugsweise einem Wirbelboden des Wirbelschichtreaktors, zugeführt wird, so dass das vorbehandelte teilchenförmige Metall verwirbelt wird.

3. Verfahren nach einem der vorhergehenden Ansprüche, wobei das Behandlungssystem einen Hochofen zur Verarbeitung des behandelten teilchenförmigen Metalls umfasst.

4. Verfahren nach einem der vorhergehenden Ansprüche, wobei die Vorbehandlungseinheit (1) eine Reaktionskammer eines Wirbelschichtreaktors umfasst.

5. Verfahren nach einem der vorhergehenden Ansprüche, wobei das Vorbehandlungsmittel (2) ein Gas ist und dem teilchenförmigen Metall in der Vorbehandlungseinheit (1), vorzugsweise einem Wirbelboden des Wirbelschichtreaktors, zugeführt wird, so dass das teilchenförmige Metall verwirbelt wird.

6. Verfahren nach einem der vorhergehenden Ansprüche, wobei das teilchenförmige Metall Eisenerz oder vorzugsweise Eisenerzpellets ist.

7. Verfahren nach einem der vorhergehenden Ansprüche, **dadurch gekennzeichnet, dass** das Vorbehandlungsmittel (2) ein Reduktionsmittel und insbesondere gasförmiger Wasserstoff ist.

8. Verfahren nach einem der vorhergehenden Ansprüche, wobei der gasförmige Wasserstoff mit erneuerbarer Energie, insbesondere in einer Elektrolyseeinheit, die mit Strom aus erneuerbaren Energiequellen betrieben wird, produziert wird.

9. Verfahren nach einem der vorhergehenden Ansprüche, wobei das vorbehandelte teilchenförmige Metall ein reduziertes teilchenförmiges Metall ist.

10. Verfahren nach einem der vorhergehenden Ansprüche, wobei das mindestens eine Transportfahrzeug (3) einen Waggon und/oder ein Schiff umfasst.

11. Verfahren nach einem der vorhergehenden Ansprüche, wobei das vorbehandelte teilchenförmige Metall in einer inerten Atmosphäre transportiert wird.

12. Verfahren nach einem der vorhergehenden Ansprüche, wobei das teilchenförmige Metall ein Metall aus der folgenden Gruppe umfasst:
- Eisen (Fe),
- Zink (Zn),
- Kupfer (Cu),
- Alkalimetall, insbesondere Magnesium (Mg).

## Revendications

1. Procédé de manipulation de particules métalliques et en particulier pour transporter de l'énergie sur de grandes distances, comprenant les étapes suivantes :
1a) fournir des particules métalliques à une unité de pré-traitement (1) à un premier emplacement,
1b) pré-traiter les particules métalliques dans l'unité de pré-traitement (1) avec un agent de pré-traitement (2) pour produire des particules métalliques pré-traitées,
2a) transférer les particules métalliques pré-traitées de l'unité de pré-traitement vers au moins un récipient de transport (3),
2b) transférer les particules métalliques pré-traitées de l'unité de pré-traitement avec l'au moins un récipient de transport (3) vers un second emplacement,
3a) transférer les particules métalliques pré-traitées au second emplacement vers un système de traitement (4),
3b) traiter les particules métalliques pré-traitées dans le système de traitement (4), dans lequel l'étape 3b) comprend les étapes de :
3b.1) traiter les particules métalliques pré-traitées dans une unité de traitement intermédiaire avec un agent de traitement intermédiaire pour produire des particules métalliques traitées de manière intermédiaire et pour retirer de l'énergie thermique et/ou un gaz, dans lequel les particules métalliques traitées sont des particules métalliques oxydées,
3b.2) transférer les particules métalliques traitées de manière intermédiaire vers une unité de traitement finale (4) dans laquelle les particules métalliques traitées de manière intermédiaire sont traitées,
**caractérisé en ce que**
de la vapeur d'eau est fournie en tant qu'agent de traitement intermédiaire sur les particules métalliques pré-traitées, de façon à ce que des particules métalliques oxydées et de l'hydrogène soient produits, dans lequel l'hydrogène est retiré pour un traitement ultérieur.

2. Procédé selon la revendication 1, dans lequel l'agent de traitement intermédiaire est fourni aux particules métalliques pré-traitées dans l'unité de traitement intermédiaire, de préférence vers un fond de fluidisation du réacteur à lit fluidisé de façon à ce que les particules métalliques pré-traitées soient fluidisées.

3. Procédé selon l'une des revendications précédentes, dans lequel le système de traitement comprend un haut fourneau pour traiter les particules métalliques pré-traitées.

4. Procédé selon l'une des revendications précédentes, dans lequel l'unité de pré-traitement (1) comprend une chambre de réaction d'un réacteur à lit fluidisé.

5. Procédé selon l'une des revendications précédentes, dans lequel l'agent de pré-traitement (2) est un gaz et est fourni aux particules métalliques dans l'unité de pré-traitement (1), de préférence vers un fond de fluidisation du réacteur à lit fluidisé de façon à ce que les particules métalliques soient fluidisées.

6. Procédé selon l'une des revendications précédentes, dans lequel les particules métalliques sont du minerai de fer ou de préférence des granulés de minerai de fer.

7. Procédé selon l'une des revendications précédentes, dans lequel l'agent de pré-traitement (2) est un agent réducteur et en particulier de l'hydrogène gazeux.

8. Procédé selon l'une des revendications précédentes, dans lequel l'hydrogène gazeux est produit avec de l'énergie renouvelable, en particulier dans une unité d'électrolyse fonctionnant par de l'électricité dérivée de sources d'énergie renouvelable.

9. Procédé selon l'une des revendications précédentes, dans lequel les particules métalliques pré-traitées sont des particules métalliques réduites.

10. Procédé selon l'une des revendications précédentes, dans lequel l'au moins un récipient de transport (3) comprend un wagon et/ou un navire.

11. Procédé selon l'une des revendications précédentes, dans lequel les particules métalliques pré-traitées sont transportées dans une atmosphère inerte.

12. Procédé selon l'une des revendications précédentes, dans lequel les particules métalliques comprennent un métal du groupe suivant :
- fer (Fe),
- zinc (Zn),
- cuivre (Cu),
- métal alcalin, en particulier magnésium (Mg).
